# EUROPEAN PATENT APPLICATION

(11) **EP 3 791 945 A1**
(43) Date of publication of application: **17.03.2021**
(21) Application number: 20194037.6
(22) Date of filing: 02.09.2020
(51) Int. Cl.: B01D 5/00, F25D 17/06, F25D 23/00, F25D 29/00, F24F 1/06, F24F 1/46, H01L 21/67

(54) **MODULAR HOUSING SYSTEM FOR A PROCESS CHILLER**

(30) Priority: 16.09.2019 US 201962901103 P; 03.10.2019 US 201916592573
(71) Applicant: Hyfra Industriekühlanlagen GmbH, 56593 Krunkel (DE)
(72) Inventor: SEYFERT-JOINER, Nicholas, 53547 Breitscheid (DE)
(74) Representative: Barker Brettell LLP

(57) **Abstract**

This disclosure relates generally to manufacturing a process chiller. Example embodiments include a method of manufacturing a process chiller (100) with four sides selectively configurable for controlling air flow through the process chiller, the method comprising: positioning a pump (131) relative to a tank (132) in a fluid module (130), wherein the pump (131) is positioned to a left side of the tank (132), a back side of the tank (132), or to a right side of the tank (132), wherein the fluid module (130) comprises fluid connections (135) configured to extend from a left side of the fluid module (130), a back side of the fluid module (130), or a right side of the fluid module (130) for coupling to fluid conduits from one or more external sources; positioning a fan (126) in a refrigeration module (120) relative to a condenser (122) and a heat exchanger (123), wherein the condenser (122) extends diagonally across the refrigeration module (120) and divides the refrigeration module (120) into two regions, wherein each region comprises two sides, wherein the heat exchanger (123) is located in a first region and the fan (126) is positioned on a first side in a second region opposite the heat exchanger (123); positioning an air permeable panel (150) on at least one of a first side or a second side of the two sides in the first region, wherein air flow into the refrigeration module (120) via the air permeable panel (150); positioning a nonpermeable panel (140) on a second side in the second region, wherein the nonpermeable panel (140) prevents air flow through the second side in the second region, wherein air flow passes from the first region through the condenser (122) to the fan (126); coupling the refrigeration module (120) to the fluid module (130); and coupling an electronics module (110) to the refrigeration module (120) in one of three configurations based on user access to the electronics module (110).

## Description

### TECHNICAL FIELD

This disclosure relates generally to manufacturing a process chiller. More specifically, this disclosure relates to a modular housing system for a process chiller and a method of manufacturing a modular process chiller configurable for use in one of various processing systems.

### BACKGROUND

Process chillers are used for supplying cool fluids to various machines in manufacturing, food handling and other processing systems in which temperature control is necessary. Each processing system has unique challenges and different machines and processes require a reliable source of cool fluids. In general, a process chiller receives fluids that were heated by a machine in the processing system. The process chiller cools the fluid to an acceptable level and supplies cool fluids to the machine at a selected temperature, flow rate and fluid pressure. For example, a processing system in an industrial environment may involve a CNC machine that uses fluids to cool the workpiece and tooling, and a process chiller supplies cool fluids to the CNC and receives heated return fluids from the CNC machine. As the CNC machine operates, heat generated during the process can vary, but the process chiller ensures fluids used by the CNC machine are supplied with a temperature below a selected threshold. Similarly, a processing system in a food industry environment may require air temperature in a food handling container stay below a threshold temperature to ensure food stays fresh. A process chiller supplies fluids to allow an air conditioner in the food handling container to maintain air temperature below the threshold temperature.

### SUMMARY

Embodiments of a modular housing process chiller disclosed herein can be manufactured using standardized locations for selected components but allow other components to be positioned in combinations as needed to provide customized solutions for many different customer applications. In all configurations, the components are in the cold air stream to maximize efficiency and the condenser is always positioned such that a fan pulls (rather than pushes) air through the condenser.

Embodiments disclosed herein are directed to a method of manufacturing a process chiller with four sides selectively configurable for controlling air flow through the process chiller. The method comprises positioning a pump relative to a tank in a fluid module; positioning a fan in a refrigeration module relative to a condenser and a heat exchanger, wherein the condenser extends diagonally across the refrigeration module and divides the refrigeration module into two regions, wherein each region comprises two sides, wherein the heat exchanger is located in a first region and the fan is positioned on a first side in a second region opposite the heat exchanger; positioning an air permeable panel on at least one of a first side or a second side of the two sides in the first region, wherein air flows into the refrigeration module via the air permeable panel; positioning a nonpermeable panel on a second side in the second region, wherein the nonpermeable panel prevents air flow through the second side in the second region, wherein air flow passes from the first region through the condenser to the fan; coupling the refrigeration module to the fluid module; and coupling an electronics module to the refrigeration module in one of three configurations based on user access to the electronics module. The pump is positioned to a left side of the tank, a back side of the tank, or to a right side of the tank, wherein the fluid module comprises fluid connections configured to extend from a left side of the fluid module, a back side of the fluid module, or a right side of the fluid module for coupling to fluid conduits from one or more external sources. In some embodiments, positioning an air permeable panel on both the first side and the second side of the two sides in the first region allows air flow through both air permeable panels; positioning an air permeable panel on the first side of the two sides in the first region and positioning a nonpermeable panel on the second side of the two sides in the first region allows air flow through only the air permeable panel on the first side; and positioning an air permeable panel on the second side of the two sides in the first region and positioning a nonpermeable panel on the first side of the two sides in the first region allows air flow through only the air permeable panel on the second side. In various embodiments, the method comprises forming the tank with a front wall and at least one side wall, wherein at least one side wall is configured for user access to fluid connections in any one of the three configurations. In some embodiments, the tank comprises the front wall and two side walls, wherein each side wall is angled for access to the fluid connections. In some embodiments, the tank comprises at least a front wall and at least one curved wall, wherein the curved wall comprises a curvature for access to the fluid connections. In some embodiments, the process chiller is manufactured for positioning proximate an enclosure for a machine, wherein the enclosure comprises the nonpermeable panel.

Embodiments disclosed herein are directed to a process chiller with four sides selectively configurable for controlling air flow through the process chiller. The process chiller comprises a fluid module comprising a pump and a tank positioned relative to the pump in one of three configurations for coupling fluid connections to fluid conduits from one or more external sources. In some embodiments, the tank comprises a front wall and at least one side wall, wherein the at least one side wall is configured for user access to fluid connections in any one of the three configurations. In some embodiments, the tank comprises the front wall and two side walls, wherein each side wall is angled for access to the fluid connections. In some embodiments, the tank comprises at least a front wall and at least one curved wall, wherein the curved wall comprises a curvature for access to the fluid connections. The process chiller further comprises a refrigeration module comprising a condenser, a heat exchanger, a compressor and a fan. The condenser extends diagonally across the refrigeration module and divides the refrigeration module into two regions, wherein each region comprises two sides. The heat exchanger is located in a first region and the fan is positioned on a first side in the second region opposite the heat exchanger. The refrigeration module further comprises a plurality of panels, with an air permeable panel positioned on at least one of a first side or a second side of the two sides in the first region and a nonpermeable panel positioned on a second side in the second region. Air flow passes through the refrigeration module via the air permeable panel, wherein the nonpermeable panel prevents air flow through the second side, whereby air flow passes from the first region through the condenser to the fan. In some embodiments, positioning an air permeable panel on both the first side and the second side of the two sides in the first region allows air flow through both air permeable panels, positioning an air permeable panel on the first side of the two sides in the first region and positioning a nonpermeable panel on the second side of the two sides in the first region allows air flow through only the air permeable panel on the first side, and positioning an air permeable panel on the second side of the two sides in the first region and positioning a nonpermeable panel on the first side of the two sides in the first region allows air flow through only the air permeable panel on the second side. The process chiller further comprises an electronics module coupled to the refrigeration module in a configuration based on user access to the process chiller. In some embodiments, the process chiller is manufactured for positioning proximate an enclosure for a machine, wherein the enclosure comprises the nonpermeable panel.

Embodiments disclosed herein are directed to a processing system, comprising a process chiller with four sides selectively configurable for controlling air flow through the process chiller. The process chiller comprises a fluid module comprising a pump and a tank positioned relative to the pump in one of three configurations for coupling fluid connections to fluid conduits from one or more external sources; a refrigeration module comprising: a condenser extending diagonally across the refrigeration module and dividing the refrigeration module into two regions, wherein each region comprises two sides; a heat exchanger located in a first region; and a fan positioned on a first side in a second region opposite the heat exchanger; a plurality of panels, comprising: an air permeable panel positioned on at least one of a first side or a second side of the two sides in the first region, wherein air flow passes through the refrigeration module via the air permeable panel; and a nonpermeable panel positioned on a second side in the second region, wherein the nonpermeable panel prevents air flow through the second side, wherein air flow passes from the first region through the condenser to the fan; and an electronics module coupled to the refrigeration module in a configuration based on user access to the process chiller. In some embodiments, the tank comprises a front wall and at least one side wall, wherein the at least one side wall is configured for user access to fluid connections in any one of the three configurations. In some embodiments, the tank comprises the front wall and two side walls, wherein each side wall is angled for access to the fluid connections. In some embodiments, the tank comprises at least a front wall and at least one curved wall, wherein the curved wall comprises a curvature for access to the fluid connections. In some embodiments, the processing system comprises a process machine, wherein an enclosure of the process machine comprises at least a part of the nonpermeable panel. In some embodiments, the processing system includes a process machine, wherein at least a portion of the air flows through the process machine.

Certain embodiments may provide one or more technical advantages. For example, embodiments of the present disclosure allow a manufacturer to manufacture a limited number of process chiller modules but offer a large number of variations of process chillers, wherein each variation can be configured based on customer requirements related to fluid connections and proximity to other machines in the process.

Certain embodiments may include none, some, or all of the above technical advantages. One or more other technical advantages may be readily apparent to one skilled in the art from the figures, descriptions, and claims included herein.

### BRIEF DESCRIPTION OF THE DRAWINGS

For a more complete understanding of the present disclosure, reference is now made to the following description, taken in conjunction with the accompanying drawings, in which:
Figure 1 depicts a partial exploded view of one embodiment of a modular process chiller;
Figures 2A-2C depict top cutaway views of embodiments of a modular process chiller, illustrating various configurations of a fluid module;
Figures 3A and 3B depict top cutaway views of embodiments of a refrigeration module, illustrating various configurations for mounting a condenser;
Figures 4A and 4B depict perspective views of one embodiment of a process chiller, illustrating different configurations for positioning nonpermeable and air permeable panels;
Figures 5A - 5F depict top cutaway views of embodiments of a refrigeration module for a modular process chiller, illustrating various configurations for selectively directing airflow through a process chiller;
Figures 6A-6E depict perspective views of one embodiment of a modular process chiller in various configurations; and
Figure 7 depicts a perspective view of one embodiment of a modular process chiller in a processing system, illustrating configurability of a process chiller to accommodate other machines and processing system requirements.

### DETAILED DESCRIPTION

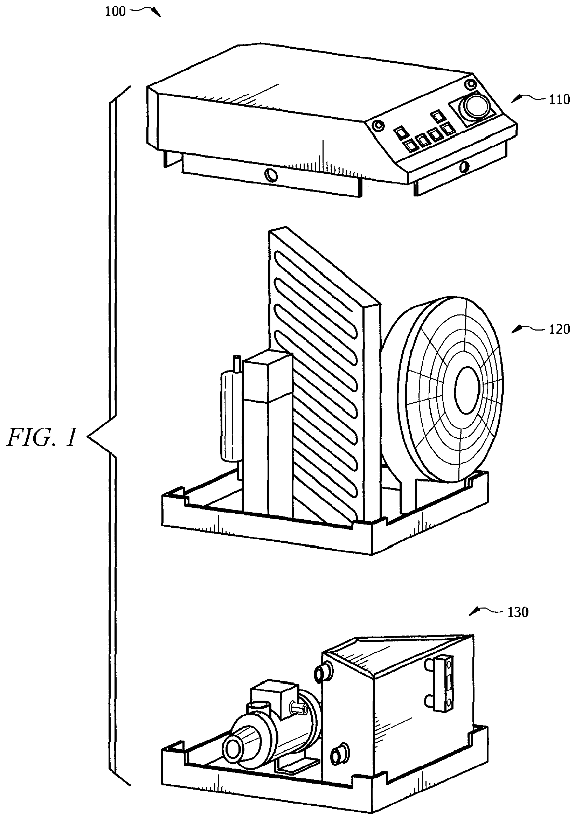

Embodiments of the present disclosure and its advantages are best understood by referring to Figures 1, 2A-2C, 3A-3B, 4A-4B, 5A-5F, 6A-6E and 7 of the drawings, like numerals being used for like and corresponding parts of the various drawings.

A process chiller cools fluids received from one or more machines in a processing system and supplies the one or more machines with cooled fluids. Figure 1 depicts a partial exploded view of one embodiment of a modular process chiller. As depicted in Figure 1, process chiller 100 comprises fluid module 130, refrigeration module 120 and electronics module 110. Each of modules 110, 120 and 130 is configured based on customer requirements and coupled with the other modules into a configuration suited for a particular customer application, including positioning relative to other machines, obstacles, or areas of concern. Each module 110, 120, 130 can be manufactured separately and coupled together to form process chiller 100.

An electronics control module 110 is capable of sensing temperature, flow rate and other characteristics of fluid received by the process chiller and controlling the temperature, flow rate and fluid pressure of the cooled fluids supplied by the process chiller. In some embodiments, the electronics module 110 is capable of receiving manual inputs and operating independently of other machines in the processing system. In some embodiments, the electronics module 110 is communicatively coupled to at least one machine in the processing system such that the electronics module 110 is configured to adjust operating parameters of the fluid module 130 or the refrigeration module 120 based on a received signal from the machine in the processing system.

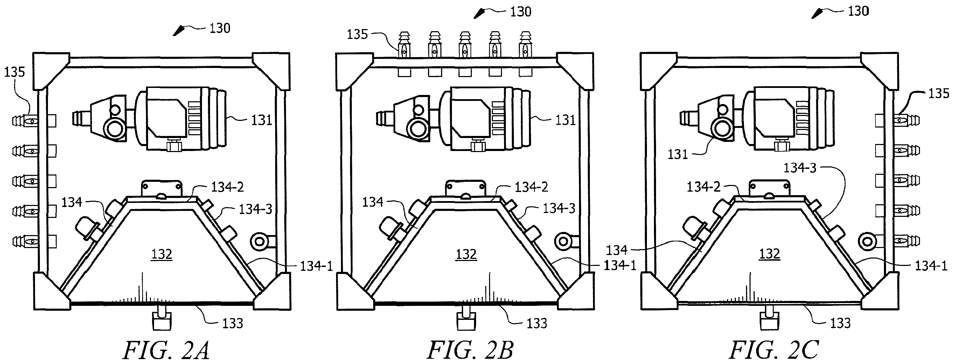

A fluid module receives heated fluids from the processing system, pumps fluids throughout the process chiller to cool the fluid, stores the fluid if needed, and supplies cooled fluids to one or more machines in the processing system. Figures 2A-2C depict top cutaway views of embodiments of a fluid module 130 for modular process chiller 100, illustrating various configurations of a pump and tank relative to fluid connections. Fluid module 130 comprises a pump 131 for generating fluid flow through process chiller 100, a tank 132 formed to store fluid from pump 131, and connectors 135 for receiving fluids from other parts of a machine or returning fluids to the machine. The position of tank 132 relative to pump 131 may be standardized across all variations of module 130, allowing a manufacturer to develop consistent manufacturing practices for all variations of process chiller 100. Tank 132 is formed to maximize a volume of fluid that can be stored while still allowing access to other valves, couplings and other fluid handling components in fluid module 130. In some embodiments, one or more side walls 134 couple with front wall 133 to form tank 132. Figures 2A-2C depict embodiments in which tank 132 is formed with angled walls 134-1, 134-2 and 134-3, wherein front wall 133 either is formed integrally with or is formed separately but positioned proximal with a front side of fluid module 130, and side walls 134-1, 134-2 and 134-3 couple to form a four walled cross-sectioned area. In other embodiments (not shown) two side walls 134 couple to front wall 133 to form a three walled cross-sectioned area or curved wall(s) 134 couple to front wall 133. Front wall 133 or side walls 134 can include other ports, valves, or fluid indicators.

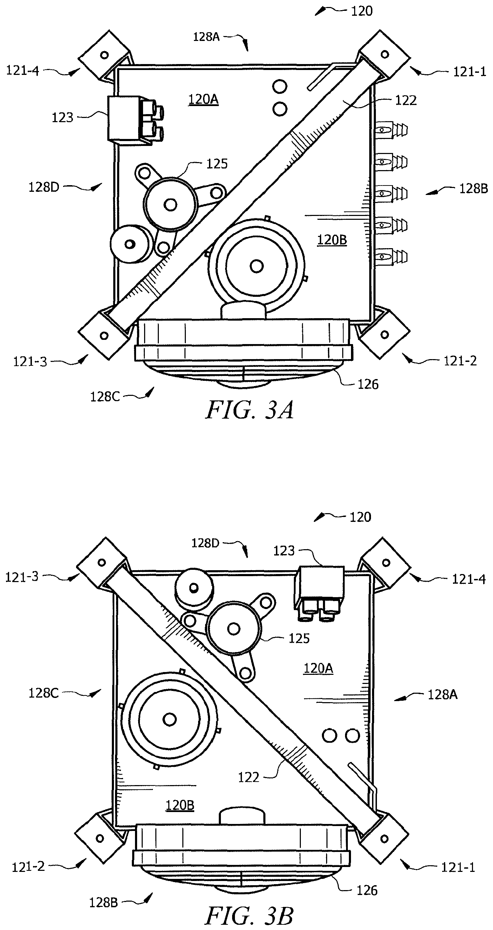

A refrigeration module 120 includes a fan 126 to draw air flow across a heat exchanger 123 and a condenser 122 to cool fluids received from the one or more machines in the processing system to a preselected temperature. Figures 3A and 3B depict top cutaway views of embodiments of refrigeration module 120 illustrating various configurations for mounting a fan relative to a condenser. As depicted in Figures 3A and 3B, condenser 122 extends diagonally between corners 121-1 and 121-3 to divide refrigeration module 120 into two regions 120A and 120B. Heat exchanger 123 and compressor 125 are located in a first region 120A of refrigeration module 120 and fan 126 is positioned in a second region 120B. Advantageously, by positioning condenser 122 diagonally across refrigeration module 120, condenser 122 has a larger surface area to condense the refrigerant and make it liquid again and refrigeration module 120 has more options in directing air flow through refrigeration module 120. First region 120A is sometimes referred to as the "cold" side of refrigeration module 130 and second region 120B is sometimes referred to as the "hot" side of refrigeration module because cold air enters refrigeration module 130 through one or more air permeable panels positioned on sides 128A, 128B (referring to Figure 3B) or 128A, 128D (referring to Figure 3A), passes through condenser 122 where it absorbs heat transferred from a fluid flowing through condenser 122, and passes through fan 126 out of side 128C.

Embodiments allow a manufacturer to manufacture all variations of refrigeration module 120 with selected components 123, 124 and 125 in the same position, and refrigeration module 120 may be coupled to fluid module 130 in various configurations. For example, as depicted in Figure 3A, refrigeration module 120 is coupled to fluid module 130 such that fluid connectors 135 extend out right side 128B, whereas in Figure 3B, refrigeration module 120 is coupled to fluid module 130 such that fluid connectors 135 extend out front side 128C. Advantageously, the ability to manufacture refrigeration module with selected components in the same position, along with the ability to position the condenser 122 in either diagonal position and couple the refrigeration module 120 to the fluid module 130 in one of four possible configuration allows for consistent manufacturing processes which reduce manufacturing complexity and costs, but enables a manufacturer to manufacture variations of a process chiller for customized solutions to address specific customer needs.

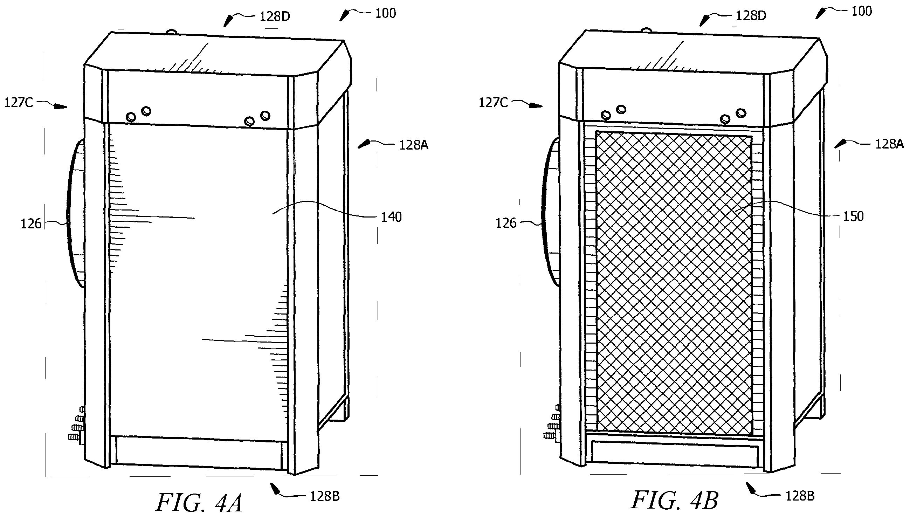

To control airflow though refrigeration module 120, a nonpermeable panel is positioned on any one or more of sides 128A, 128B and 128D. Figures 4A and 4B depict perspective views of one embodiment of a process chiller, illustrating nonpermeable panel 140 or air permeable panel 150 on side 128B. In some embodiments, nonpermeable panel 140 comprises sheet metal, glass, plastic, or some other material capable of preventing air flow into process chiller 100. In some embodiments, air permeable panel 150 comprises a grill, a screen, an air filter or a membrane adapted to allow air flow into process chiller 100.

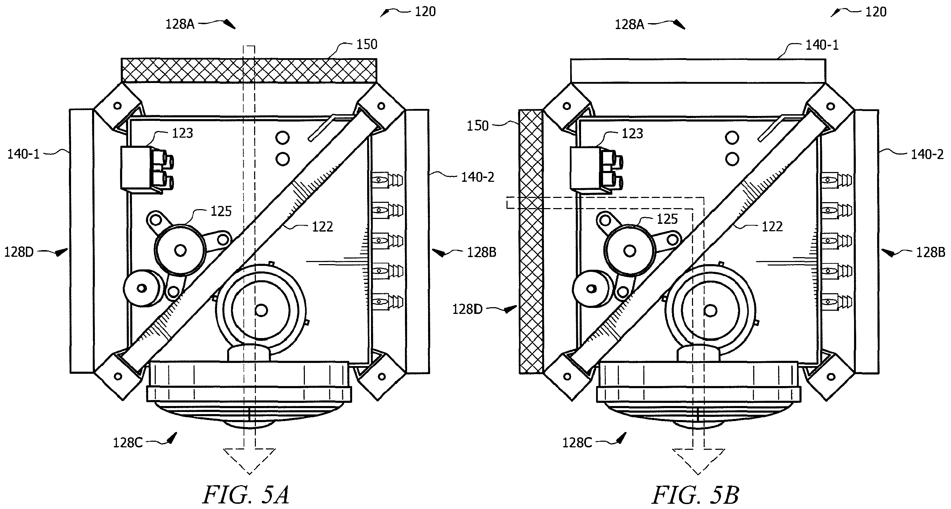

Figures 5A-5F depict top cutaway views of embodiments of a modular process chiller, illustrating various configurations for selectively directing airflow through a process chiller using nonpermeable panels 140 and air permeable panels 150. As depicted in Figures 5A-5C, heat exchanger 123 and compressor 125 are located in region 120A, condenser 122 is oriented diagonally from a front left corner to a rear right corner and fan 126 is positioned on a front side 128C of refrigeration module 120.

As depicted in Figure 5A, nonpermeable panels 140-1 (positioned on left side 128D) and 140-2 (positioned on right side 128B) prevent airflow into refrigeration module 120 from the left side and the right side, and air permeable panel 150 positioned on rear 128A allows airflow into refrigeration module 120 from the rear only. Air flows past heat exchanger 123, across condenser 122 to cool fluid, through fan 126 and exits front panel 128C.

As depicted in Figure 5B, nonpermeable panels 140-1 (positioned on rear 128A) and 140-2 (positioned on right side 128B) prevent airflow into refrigeration module 120 from the rear and the right side, and air permeable panel 150 positioned on left side 128D allows airflow into refrigeration module 120 from the left side only. Air flows past heat exchanger 123, across condenser 122 to cool fluid, through fan 126 and exits front panel 128C.

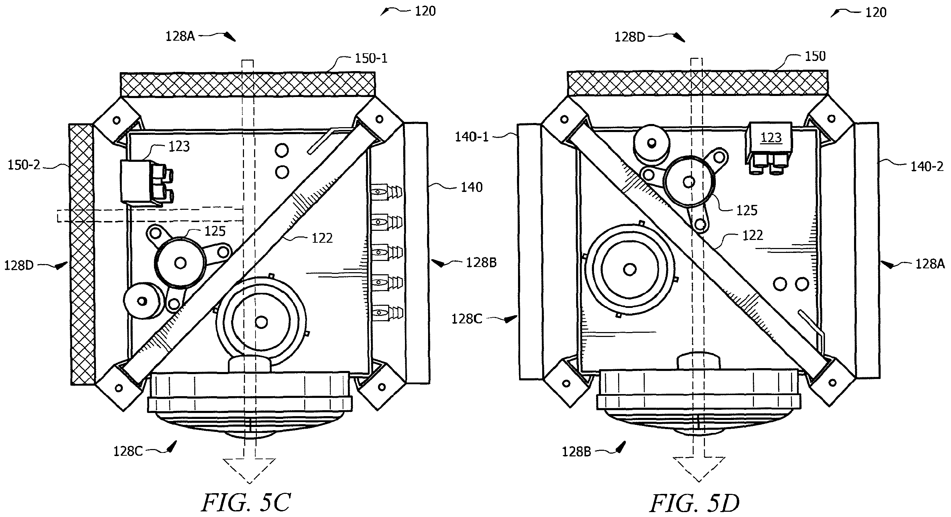

As depicted in Figure 5C, nonpermeable panels 140 positioned on right side 128B prevents airflow into refrigeration module 120 from the right side, and air permeable panels 150-1 (positioned on rear 128A) and 150-2 (positioned on left side 128D) allow airflow into refrigeration module 120 from the rear and the left side. Air flows past heat exchanger 123, across condenser 122 to cool fluid, through fan 126 and exits front panel 128C.

As depicted in Figures 5D-5F, refrigeration module 120 is manufactured with heat exchanger 123 and compressor 125 in the same location as embodiments depicted in Figures 5A-5C and condenser 122 is oriented diagonally from a front left corner to a rear right corner. However, fan 126 is positioned on an alternate side 128B such that configurations depicted in Figures 5D-5F allow for alternate air flows than those depicted in Figures 5A-5C.

As depicted in Figure 5D, nonpermeable panels 140-1 (positioned on left side 128D) and 140-2 (positioned on right side 128B) prevent airflow into refrigeration module 120 from the left side and the right side, and air permeable panel 150 positioned on rear 128A allows airflow into refrigeration module 120 from the rear only. Air flows past heat exchanger 123, across condenser 122 to cool fluid, through fan 126 and exits front panel 128C.

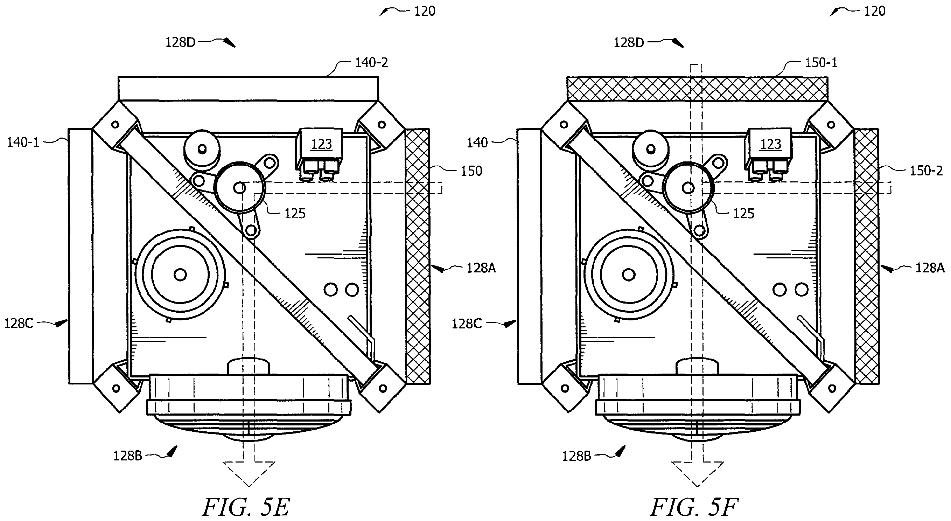

As depicted in Figure 5E, nonpermeable panels 140-1 (positioned on rear 128A) and 140-2 (positioned on right side 128B) prevent airflow into refrigeration module 120 from the rear and the right side, and air permeable panel 150 positioned on left side 128D allows airflow into refrigeration module 120 from the left side only. Air flows past heat exchanger 123, across condenser 122 to cool fluid, through fan 126 and exits front panel 128C.

As depicted in Figure 5F, nonpermeable panels 140 positioned on right side 128B prevents airflow into refrigeration module 120 from the right side, and air permeable panels 150-1 (positioned on rear 128A) and 150-2 (positioned on left side 128D) allow airflow into refrigeration module 120 from the rear and the left side. Air flows past heat exchanger 123, across condenser 122 to cool fluid, through fan 126 and exits front panel 128C.

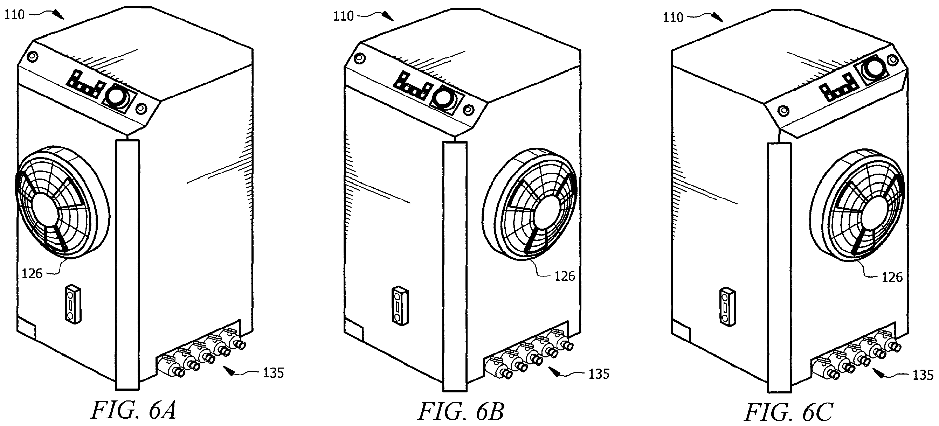

Figures 6A-6E depict perspective views of one embodiment of a modular process chiller in various configurations, illustrating the capability of a modular housing process chiller to provide customized solutions to meet customer needs.

Figure 6A depicts a perspective view of one embodiment of a modular process chiller in a configuration in which the user controls for electronics module 130 and fan 126 are positioned on a first side and fluid connections 135 are on a second side. It should be noted that the second side can be one of three sides that do not have the user controls for electronics module 130 and fan 126 positioned thereon.

Figure 6B depicts a perspective view of one embodiment of a modular process chiller in a configuration in which fluid connections 135 and fan 126 are positioned on a first side and the user controls for electronics module 130 is positioned on a second side. It should be noted that the second side can be one of three sides that do not have the fluid connections 135 and fan 126 positioned thereon.

Figure 6C depicts a perspective view of one embodiment of a modular process chiller in a configuration in which the user controls for electronics module 130, fluid connections 135 and fan 126 are all positioned on a single side. Embodiments may be configured such that any side contains the user controls for electronics module 130, fluid connections 135 and fan 126.

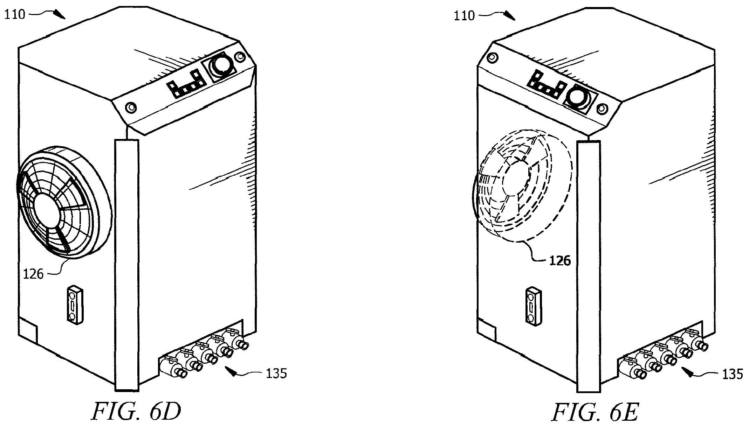

Figure 6D depicts a perspective view of one embodiment of a modular process chiller in a configuration in which the user controls for electronics module 130 and fluid connections 135 are positioned on a first side and fan 126 is positioned on a second side. It should be noted that the second side can be one of three sides that do not have the user controls for electronics module 130 and the fluid connections 135 positioned thereon.

Figure 6E depicts a perspective view of one embodiment of a modular process chiller in a configuration in which the user controls for electronics module 130, fan 126 and fluid connections 135 are each positioned on separate sides.

Figures 6A-6E illustrate the concept that a modular process chiller can be manufactured using standardized locations for selected components but allow other components to be positioned as needed to provide customized solutions for many different customer applications. The positioning of one or more air permeable panels and nonpermeable panels in the configurations depicted in Figures 6A-6E controls the direction(s) from which air may be pulled through the condenser. Regardless, in all configurations, the components are in the cold air stream to maximize efficiency and the condenser is always positioned such that a fan pulls (rather than pushes) air through the condenser.

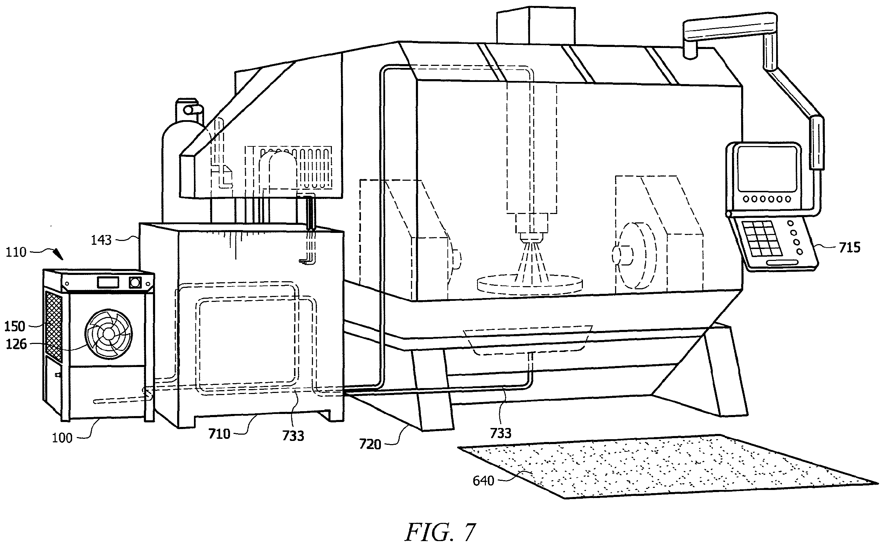

Figure 7 depicts a system level perspective view of one embodiment of modular process chiller 120 manufactured using standardized locations for selected components but configured for use in a processing system in a manufacturing environment. In Figure 7, a machine 620 is performing a manufacturing process that requires cooling. The machine 620 may have a user station 615 on one side, limiting the space available for a process chiller. An area 640 in front of machine 620 may be designated as an area which must be kept clear of any machines, further limiting the space available for other a process chiller. A second machine 610 may be positioned proximate the first machine 620, further limiting the space available for a process chiller. Embodiments disclosed herein include modular process chillers formed such that fluid connections 633 extend from a side proximate machine 610 for passage through machine 610 to assist with cooling machine 620, air permeable panel 150 is positioned on a side opposite machine 610 and a rear of modular process chiller 120, a fan 126 is positioned on a front of modular process chiller 120 and an electronics module is oriented for ease of access by a user. Although not shown, machines 610, 620 may be positioned near a wall or other structure, further limiting the space available for a process chiller, wherein a nonpermeable panel may be positioned on rear of modular process chiller 120 to ensure all air flows through air permeable panel 150 on only one side of modular process chiller 120. In some embodiments, modular process chiller 120 is integrated with machine 610 such that side 143 of machine 610 comprises nonpermeable panel 140 for process chiller 120. Those skilled in the art will appreciate that the location of modular process chiller 120 relative to machines 610 and 620 is illustrative only, and that the location may vary, which could affect the configuration of modular process chiller 120.

Modifications, additions, or omissions may be made to the systems, apparatuses, and methods described herein without departing from the scope of the disclosure. The components of the systems and apparatuses may be integrated or separated. Moreover, the operations of the systems and apparatuses may be performed by more, fewer, or other components. For example, refrigeration system 100 may include any suitable number of compressors, condensers, condenser fans, evaporators, valves, sensors, controllers, and so on, as performance demands dictate. One skilled in the art will also understand that refrigeration system 100 can include other components that are not illustrated but are typically included with refrigeration systems. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods described herein without departing from the scope of the disclosure. The methods may include more, fewer, or other steps. Additionally, steps may be performed in any suitable order.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the spirit and scope of this disclosure.

## Claims

1. A method of manufacturing a process chiller (100) with four sides selectively configurable for controlling air flow through the process chiller, the method comprising:
positioning a pump (131) relative to a tank (132) in a fluid module (130), wherein the pump (131) is positioned to a left side of the tank (132), a back side of the tank (132), or to a right side of the tank (132), wherein the fluid module (130) comprises fluid connections (135) configured to extend from a left side of the fluid module (130), a back side of the fluid module (130), or a right side of the fluid module (130) for coupling to fluid conduits from one or more external sources;
positioning a fan (126) in a refrigeration module (120) relative to a condenser (122) and a heat exchanger (123), wherein the condenser (122) extends diagonally across the refrigeration module (120) and divides the refrigeration module (120) into two regions, wherein each region comprises two sides, wherein the heat exchanger (123) is located in a first region and the fan (126) is positioned on a first side in a second region opposite the heat exchanger (123);
positioning an air permeable panel (150) on at least one of a first side or a second side of the two sides in the first region, wherein air flow into the refrigeration module (120) via the air permeable panel (150);
positioning a nonpermeable panel (140) on a second side in the second region, wherein the nonpermeable panel (140) prevents air flow through the second side in the second region, wherein air flow passes from the first region through the condenser (122) to the fan (126);
coupling the refrigeration module (120) to the fluid module (130); and
coupling an electronics module (110) to the refrigeration module (120) in one of three configurations based on user access to the electronics module (110).

2. The method of manufacturing a process chiller (100) of Claim 1, wherein:
positioning an air permeable panel (150) on both the first side and the second side of the two sides in the first region allows air flow through both air permeable panels (150);
positioning an air permeable panel (150) on the first side of the two sides in the first region and positioning a nonpermeable panel (140) on the second side of the two sides in the first region allows air flow through only the air permeable panel (150) on the first side; and
positioning an air permeable panel (150) on the second side of the two sides in the first region and positioning a nonpermeable panel (140) on the first side of the two sides in the first region allows air flow through only the air permeable panel (150) on the second side.

3. The method of manufacturing a process chiller (100) of Claim 1, comprising:
forming the tank (132) with a front wall and at least one side wall, wherein the at least one side wall is configured for user access to fluid connections (135) in any one of the three configurations.

4. The method of manufacturing a process chiller (100) of Claim 3, wherein:
the tank (132) comprises the front wall and two side walls, wherein each side wall is angled for access to the fluid connections (135).

5. The method of manufacturing a process chiller (100) of Claim 3, wherein:
the tank (132) comprises at least a front wall and at least one curved wall (134), wherein the curved wall comprises a curvature for access to the fluid connections (135).

6. The method of manufacturing a process chiller (100) of Claim 2, wherein:
the process chiller (100) is manufactured for positioning proximate an enclosure for a machine, wherein the enclosure comprises the nonpermeable panel (140).

7. A process chiller (100) with four sides selectively configurable for controlling air flow through the process chiller, comprising:
a fluid module (130) comprising a pump (131) and a tank (132) positioned relative to the pump (131) in one of three configurations for coupling fluid connections to fluid conduits from one or more external sources;
a refrigeration module (120) comprising:
a condenser (122) extending diagonally across the refrigeration module (120) and dividing the refrigeration module (120) into two regions, wherein each region comprises two sides;
a heat exchanger (123) located in a first region; and
a fan (126) positioned on a first side in a second region opposite the heat exchanger (123);
a plurality of panels, comprising:
an air permeable panel (150) positioned on at least one of a first side or a second side of the two sides in the first region, wherein air flow passes through the refrigeration module (120) via the air permeable panel (150); and
a nonpermeable panel (140) positioned on a second side in the second region, wherein the nonpermeable panel (140) prevents air flow through the second side, wherein air flow passes from the first region through the condenser to the fan;
and
an electronics module (110) coupled to the refrigeration module (120) in one of three configurations based on user access to the process chiller.

8. The process chiller (100) of Claim 7, wherein:
positioning an air permeable panel (150) on both the first side and the second side of the two sides in the first region allows air flow through both air permeable panels (150);
positioning an air permeable panel (150) on the first side of the two sides in the first region and positioning a nonpermeable panel (140) on the second side of the two sides in the first region allows air flow through only the air permeable panel (150) on the first side; and
positioning an air permeable panel (150) on the second side of the two sides in the first region and positioning a nonpermeable panel (140) on the first side of the two sides in the first region allows air flow through only the air permeable panel (150) on the second side.

9. The process chiller (100) of Claim 7, wherein:
the tank comprises a front wall (133) and at least one side wall (134), wherein the at least one side wall is configured for user access to fluid connections (135) in any one of the three configurations.

10. The process chiller (100) of Claim 9, wherein:
the tank (132) comprises the front wall (133) and two side walls (134), wherein each side wall is angled for access to the fluid connections (135).

11. The process chiller (100) of Claim 9, wherein:
the tank (132) comprises at least a front wall and at least one curved wall (134), wherein the curved wall comprises a curvature for access to the fluid connections (135).

12. The process chiller (100) of Claim 7, wherein:
the process chiller (100) is manufactured for positioning proximate an enclosure for a machine, wherein the enclosure comprises the nonpermeable panel.

13. A processing system, comprising a process chiller (100) according to any one of claims 7 to 12.

14. The processing system of Claim 13, further comprising:
a process machine, wherein an enclosure of the process machine comprises at least a part of the nonpermeable panel (140).

15. The processing system of Claim 13, further comprising:
a process machine, wherein at least a portion of the air flows through the process machine.
